# EUROPÄISCHE PATENTSCHRIFT

(11) **EP 4 030 528 B1**
(45) Veröffentlichungstag und Bekanntmachung des Hinweises auf die Patenterteilung: **12.03.2025**
(21) Anmeldenummer: 21151900.4
(22) Anmeldetag: 15.01.2021
(51) Int. Cl.: H01M 10/42, H01M 50/247, H01M 50/296, H01M 50/543

(54) **AKKUPACK, SYSTEM UND VERWENDUNG EINES AKKUPACKS**
BATTERY PACK, SYSTEM AND USE OF A BATTERY PACK
BLOC D'ACCUMULATEUR, SYSTÈME ET UTILISATION D'UN BLOC D'ACCUMULATEUR

(43) Veröffentlichungstag der Anmeldung: 20.07.2022
(73) Patentinhaber: Andreas Stihl AG & Co. KG, 71336 Waiblingen (DE)
(72) Erfinder: VON HOFEN, Malte, 70197 Stuttgart (DE)
(74) Vertreter: Patentanwälte Ruff, Wilhelm, Beier, Dauster & Partner mbB

(56) Entgegenhaltungen:
- EP-A1- 3 113 912
- EP-A1- 3 376 558
- US-A1- 2013 002 175
- US-A1- 2014 009 857

## Beschreibung

### ANWENDUNGSGEBIET UND STAND DER TECHNIK

Die Erfindung bezieht sich auf einen Akkupack, ein System aufweisend einen solchen Akkupack und eine Verwendung eines solchen Akkupacks.

Die EP 3 376 558 A1 offenbart, dass in einer oberen Zelleneinheit und einer unteren Zelleneinheit, die fünf Batteriezellen umfassen, positive Elektrodenanschlüsse beabstandet und vertikal ausgerichtet sind, und negative Elektrodenanschlüsse beabstandet und vertikal ausgerichtet sind. Wenn ein elektrischer Vorrichtungskörper auf 36 V ausgelegt ist, stehen vorrichtungsseitige Anschlüsse nur an den oberen Anschlüssen in Kontakt, und ein Kurzschließen der unteren Anschlüsse wird unter Verwendung einer Kurzschlussbrücke bewirkt. Wenn der elektrische Vorrichtungskörper auf 18 V ausgelegt ist, werden die oberen und unteren Anschlüsse gleichzeitig dazu gebracht, die vorrichtungsseitigen Anschlüsse zu kontaktieren, und die obere Zelleneinheit und die untere Zelleneinheit nehmen einen parallel verbundenen Zustand an. Somit ist es möglich, die Ausgangsspannung automatisch umzuschalten, wenn ein Batteriepack gemäß dem Unterschied in der Anschlussform auf der elektrischen Vorrichtungskörperseite montiert wird. Der Oberbegriff von Anspruch 1 basiert auf der EP 3 376 558 A.

Die EP 3 113 912 A1 bezieht sich auf eine Elektrowerkzeug- und Batteriepackanordnung, die einen Batteriepack zum Verbinden mit dem Elektrowerkzeug enthält, um Leistung für den Betrieb des Elektrowerkzeugs bereitzustellen, wenn er damit verbunden ist. Der Batteriepack enthält eine Vielzahl von Leistungszellen, und es sind Verbindungsmittel (40, 42) vorgesehen, um die selektive Zufuhr von Leistung auf mindestens einem ersten oder zweiten Spannungspegel zu dem Elektrowerkzeug von dem Batteriepack zu ermöglichen.

Die US 2013/002175 A1 offenbart, dass ein Elektroleistungswerkzeug in einer Vielzahl von Typen von Elektroleistungswerkzeugen enthalten ist. Die Vielzahl von Typen von Elektroleistungswerkzeugen umfassen eine Vielzahl von Typen von Batteriepacks mit unterschiedlichen Nennausgangsspannungen und eine Vielzahl von Typen von Werkzeugkörpern, deren Gehäuse mit einem angebrachten Teil ausgestattet sind, an dem jeder der Batteriepacks montiert frei entfernbar ist. Das angebrachte Teil, das die Vielzahl von Typen von Werkzeugkörpern besitzen, die mit Motoren mit unterschiedlichen Spannungscharakteristiken ausgestattet sind, ist so ausgebildet, dass es in der Lage ist, einen beliebigen der Vielzahl von Typen von Batteriepacks mit unterschiedlichen Nennausgangsspannungen zu montieren. Dies ermöglicht es, das Angebot an verfügbaren Batteriepacks zu erweitern und den Komfort zu erhöhen.

### AUFGABE UND LÖSUNG

Der Erfindung liegt als Aufgabe die Bereitstellung eines Akkupacks, der verbesserte Eigenschaften aufweist, eines Systems aufweisend einen solchen Akkupack und eine Verwendung eines solchen Akkupacks zugrunde.

Die Erfindung löst die Aufgabe durch die Bereitstellung eines Akkupacks mit den Merkmalen des Anspruchs 1, eines Systems mit den Merkmalen des Anspruchs 9 und einer Verwendung mit den Merkmalen des Anspruchs 11. Vorteilhafte Weiterbildungen und/oder Ausgestaltungen der Erfindung sind in den abhängigen Ansprüchen beschrieben.

Der erfindungsgemäße Akkupack (Englisch: battery pack) umfasst bzw. weist eine Mehrzahl von Akkumulatorzellen und mindestens, insbesondere genau, drei, insbesondere elektrische, Packleistungskontakte bzw. Packleistungsklemmen bzw. Packleistungsanschlüsse bzw. Packleistungsterminals auf. Ein erstes Packpaar der Packleistungskontakte ist zur, insbesondere mechanischen und/oder unmittelbaren, Berührung von Geräteleistungskontakten, insbesondere jeweils, eines ersten elektrisch angetriebenen Bearbeitungsgeräts und/oder eines ersten, insbesondere elektrischen, Ladegeräts ausgebildet bzw. konfiguriert. Der Akkupack ist, insbesondere nur bzw. allein und/oder automatisch, durch die Berührung zur, insbesondere automatischen und/oder unmittelbaren, Versorgung des ersten Bearbeitungsgeräts mit elektrischer Antriebsleistung mit einer ersten elektrischen Spannung, insbesondere eines ersten Werts der ersten Spannung und/oder Nennspannung, von mindestens einem Teil der Mehrzahl von Akkumulatorzellen und/oder mindestens eines, insbesondere des, selben Teils der Mehrzahl von Akkumulatorzellen mit elektrischer Aufladeleistung mit der ersten Spannung von dem ersten Ladegerät mittels des ersten Packpaars ausgebildet bzw. konfiguriert. Ein von dem ersten mindestens, insbesondere nur, in Teilen verschiedenes zweites Packpaar der Packleistungskontakte ist zur, insbesondere mechanischen und/oder unmittelbaren, Berührung von Geräteleistungskontakten, insbesondere jeweils, eines zweiten elektrisch angetriebenen Bearbeitungsgeräts und/oder eines zweiten, insbesondere elektrischen, Ladegeräts ausgebildet bzw. konfiguriert. Der Akkupack ist, insbesondere nur bzw. allein und/oder automatisch, durch die Berührung zur, insbesondere automatischen und/oder unmittelbaren, Versorgung des zweiten Bearbeitungsgeräts mit elektrischer Antriebsleistung mit einer gegenüber der ersten höheren zweiten elektrischen Spannung, insbesondere eines gegenüber dem ersten höheren zweiten Wert der zweiten Spannung und/oder Nennspannung, von mindestens einem, insbesondere dem, selben Teil der Mehrzahl von Akkumulatorzellen und/oder mindestens eines, insbesondere des, selben Teils der Mehrzahl von Akkumulatorzellen mit elektrischer Aufladeleistung mit der zweiten Spannung von dem zweiten Ladegerät mittels des zweiten Packpaars ausgebildet bzw. konfiguriert.

Dies, insbesondere die Definierung bzw. Festlegung der Versorgung mit der ersten Spannung, insbesondere nur bzw. allein und/oder automatisch, durch die Berührung des ersten Packpaars und mit der zweiten Spannung, insbesondere nur bzw. allein und/oder automatisch, durch die Berührung des zweiten Packpaars, ermöglicht einen einfachen und sicheren Aufbau bzw. eine einfache und sichere Konstruktion des Akkupacks. Insbesondere braucht oder kann der Akkupack zur Definierung der Versorgung mit, insbesondere entweder, der ersten Spannung oder der zweiten Spannung nicht anderweitig, z.B. nicht aufweisend eine Kommunikationseinrichtung zur Kommunikation mit dem ersten Bearbeitungsgerät, dem ersten Ladegerät, dem zweiten Bearbeitungsgerät und/oder dem zweiten Ladegerät und/oder nicht aufweisend eine Benutzervorgabeeinrichtung zu einer, insbesondere manuellen, Benutzervorgabe, ausgebildet sein. Zusätzlich oder alternativ ermöglicht dies eine einfache und sichere Verwendung des Akkupacks mit dem ersten Bearbeitungsgerät und/oder dem ersten Ladegerät, insbesondere mit der ersten Spannung, und/oder mit dem zweiten Bearbeitungsgerät und/oder dem zweiten Ladegerät, insbesondere mit der zweiten Spannung, insbesondere wobei das erste Bearbeitungsgerät, das erste Ladegerät, das zweite Bearbeitungsgerät und/oder das zweiten Ladegerät bereits vorhanden sein können/kann.

Insbesondere kann der Akkupack als *"Dual System Battery"* bezeichnet werden.

Das, insbesondere erste oder zweite, Bearbeitungsgerät kann ein Garten-, Forst-, Bau- und/oder Bodenbearbeitungsgerät sein. Zusätzlich oder alternativ kann das, insbesondere erste oder zweite, Bearbeitungsgerät boden- und/oder handgeführt, insbesondere handgetragen sein. Insbesondere handgeführtes, insbesondere handgetragenes, Bearbeitungsgerät kann bedeuten, dass das, insbesondere erste oder zweite, Bearbeitungsgerät eine Masse von maximal 50 kg (Kilogramm), insbesondere maximal 20 kg, insbesondere maximal 10 kg, aufweisen bzw. haben kann.

Der Akkupack kann zur, insbesondere werkzeugfrei und/oder zerstörungsfrei, lösbaren, insbesondere elektrischen und/oder mechanischen, Verbindung mit dem ersten Bearbeitungsgerät, dem ersten Ladegerät, dem zweiten Bearbeitungsgerät und/oder dem zweiten Ladegerät ausgebildet sein. Insbesondere kann der Akkupack zum Tragen durch das erste Bearbeitungsgerät, das erste Ladegerät, das zweite Bearbeitungsgerät und/oder das zweite Ladegerät ausgebildet sein.

Die, insbesondere jeweilige, Berührung kann eine elektrische und mechanische Kontaktierung sein.

Insbesondere zu einem Zeitpunkt, kann, insbesondere entweder, das erste Packpaar die, insbesondere jeweiligen, Geräteleistungskontakte, insbesondere entweder, des ersten Bearbeitungsgeräts oder des ersten Ladegeräts berühren oder das zweite Packpaar kann die, insbesondere jeweiligen, Geräteleistungskontakte, insbesondere entweder, des zweiten Bearbeitungsgeräts oder des zweiten Ladegeräts berühren. Zusätzlich oder alternativ braucht oder kann das erste Packpaar nicht zur Berührung der Geräteleistungskontakte des zweiten Bearbeitungsgeräts und/oder des zweiten Ladegeräts ausgebildet sein, und/oder das zweite Packpaar braucht oder kann nicht zur Berührung der Geräteleistungskontakte des ersten Bearbeitungsgeräts und/oder des ersten Ladegeräts ausgebildet sein.

Die Packleistungskontakte können Steckverbinder sein.

Die Akkumulatorzellen können jeweils einzelne wiederaufladbare Speicherelemente für elektrische Energie auf elektrochemischer Basis sein. Zusätzlich oder alternativ können die Akkumulatorzellen Lithium-Ionen-Akkumulatorzellen sein. Weiter zusätzlich oder alternativ können die Akkumulatorzellen gleich, insbesondere typ- und/oder baugleich, sein. Weiter zusätzlich oder alternativ kann eine, insbesondere jeweilige, Zell-Spannung, insbesondere Zell-Nennspannung, einer, insbesondere jeweiligen, der Akkumulatorzellen minimal 2 V (Volt) und/oder maximal 4 V, insbesondere 3,6 V, sein. Weiter zusätzlich oder alternativ können die Akkumulatorzellen Rundzellen, prismatische Zellen oder Pouchzellen sein.

Die Mehrzahl von Akkumulatorzellen umfasst bzw. weist eine erste Anzahl von Akkumulatorzellen und/oder eine zweite Anzahl von Akkumulatorzellen auf. Der Akkupack umfasst bzw. weist, insbesondere nur, eine, insbesondere einzige und/oder elektrische, Leistungsübertragungseinrichtung auf. Die Leistungsübertragungseinrichtung ist zur, insbesondere automatischen und/oder unmittelbaren, Übertragung von elektrischer Auflade- und/oder Antriebsleistung von dem ersten Packpaar und/oder der ersten Anzahl von Akkumulatorzellen zu der zweiten Anzahl von Akkumulatorzellen und/oder von der zweiten Anzahl von Akkumulatorzellen zu dem ersten Packpaar und/oder der ersten Anzahl von Akkumulatorzellen, insbesondere zu einer Einstellung von einem ersten Ladezustand, insbesondere eines ersten Werts des ersten Ladezustands, der ersten Anzahl von Akkumulatorzellen und/oder einem zweiten Ladezustand, insbesondere eines zweiten Werts der zweiten Ladezustands, der zweiten Anzahl von Akkumulatorzellen, insbesondere zu einer Angleichung von dem ersten Ladezustand und dem zweiten Ladezustand aneinander, ausgebildet bzw. konfiguriert. Dies ermöglicht, dass bei der Versorgung von dem ersten Ladegerät mit der Aufladeleistung mit dieser nicht nur die erste Anzahl von Akkumulatorzellen, sondern auch die zweite Anzahl von Akkumulatorzellen versorgt sein kann. Zusätzlich oder alternativ ermöglicht dies, dass bei der Versorgung des ersten Bearbeitungsgeräts mit der Antriebsleistung diese nicht nur von der ersten Anzahl von Akkumulatorzellen, sondern auch von der zweiten Anzahl von Akkumulatorzellen sein kann. Weiter zusätzlich oder alternativ, insbesondere somit, ermöglicht dies ein *"Cell balancing"* der Akkumulatorzellen.

Die Leistungsübertragungseinrichtung umfasst bzw. weist mindestens, insbesondere genau, drei, insbesondere elektrische, Ein- und/oder Ausgänge auf. Ein erstes Übertragungspaar der Ein- und/oder Ausgänge und die erste Anzahl von Akkumulatorzellen und/oder das erste Packpaar sind, insbesondere miteinander und/oder fest bzw. zeitlich dauerhaft und/oder unmittelbar, elektrisch parallel verschaltet bzw. geschaltet bzw. verbunden. Zusätzlich oder alternativ sind ein von dem ersten mindestens, insbesondere nur, in Teilen verschiedenes zweites Übertragungspaar der Ein- und/oder Ausgänge und die zweite Anzahl von Akkumulatorzellen, insbesondere miteinander und/oder fest bzw. zeitlich dauerhaft und/oder unmittelbar, elektrisch parallel verschaltet bzw. geschaltet bzw. verbunden. Weiter zusätzlich oder alternativ sind ein von dem ersten und/oder dem zweiten mindestens, insbesondere jeweils nur, in Teilen verschiedenes drittes Übertragungspaar der Ein- und/oder Ausgänge und die erste Anzahl von Akkumulatorzellen und die zweite Anzahl von Akkumulatorzellen, insbesondere miteinander bzw. gemeinsam bzw. zusammen und/oder fest bzw. zeitlich dauerhaft und/oder unmittelbar, elektrisch seriell bzw. in Reihe verschaltet bzw. geschaltet bzw. verbunden und/oder das zweite Packpaar, insbesondere miteinander und/oder fest bzw. zeitlich dauerhaft und/oder unmittelbar, elektrisch parallel verschaltet bzw. geschaltet bzw. verbunden. Dies ermöglicht, die Übertragung der Auflade- und/oder Antriebsleistung. Insbesondere kann ein Ein- und/oder Ausgang des ersten Übertragungspaars mit einem endseitigen Zellkontakt der ersten Anzahl von Akkumulatorzellen und/oder einem Packleistungskontakt des ersten Packpaars, insbesondere unmittelbar, elektrisch verbunden bzw. auf einem, insbesondere selben, Potential sein, und ein anderer Ein- und/oder Ausgang des ersten Übertragungspaars kann mit einem anderen endseitigen Zellkontakt der ersten Anzahl von Akkumulatorzellen und/oder einem anderen Packleistungskontakt des ersten Packpaars, insbesondere unmittelbar, elektrisch verbunden bzw. auf einem, insbesondere selben, Potential sein. Zusätzlich oder alternativ kann ein Ein- und/oder Ausgang des zweiten Übertragungspaars mit einem endseitigen Zellkontakt der zweiten Anzahl von Akkumulatorzellen, insbesondere unmittelbar, elektrisch verbunden bzw. auf einem, insbesondere selben, Potential sein, und ein anderer Ein- und/oder Ausgang des zweiten Übertragungspaars kann mit einem anderen endseitigen Zellkontakt der zweiten Anzahl von Akkumulatorzellen, insbesondere unmittelbar, elektrisch verbunden bzw. auf einem, insbesondere selben, Potential sein. Weiter zusätzlich oder alternativ kann ein Ein- und/oder Ausgang des dritten Übertragungspaars mit einem endseitigen Zellkontakt der ersten Anzahl von Akkumulatorzellen und der zweiten Anzahl von Akkumulatorzellen und/oder einem Packleistungskontakt des zweiten Packpaars, insbesondere unmittelbar, elektrisch verbunden bzw. auf einem, insbesondere selben, Potential sein, und ein anderer Ein- und/oder Ausgang des dritten Übertragungspaars kann mit einem anderen endseitigen Zellkontakt der ersten Anzahl von Akkumulatorzellen und der zweiten Anzahl von Akkumulatorzellen und/oder einem anderen Packleistungskontakt des zweiten Packpaars, insbesondere unmittelbar, elektrisch verbunden bzw. auf einem, insbesondere selben, Potential sein.

In einer Weiterbildung der Erfindung ist der Akkupack zur Versorgung mit nur bzw. allein der ersten Spannung mittels des ersten Packpaars ausgebildet. Der Akkupack ist zur Versorgung mit nur bzw. allein der zweiten Spannung mittels des zweiten Packpaars ausgebildet. Insbesondere braucht oder kann der Akkupack zur Versorgung mit einer von der ersten verschiedenen, insbesondere der zweiten, Spannung nicht mittels des ersten Packpaars ausgebildet sein. Zusätzlich oder alternativ braucht oder kann der Akkupack zur Versorgung mit einer von der zweiten verschiedenen, insbesondere der ersten, Spannung nicht mittels des zweiten Packpaars ausgebildet sein.

In einer Weiterbildung der Erfindung umfasst bzw. weist die Mehrzahl von Akkumulatorzellen die erste Anzahl von Akkumulatorzellen und die zweite Anzahl von Akkumulatorzellen auf. Der Akkupack ist zur Versorgung mit der ersten Spannung definiert bzw. festgelegt durch eine erste Gesamtspannung, insbesondere einen ersten Wert der ersten Gesamtspannung, insbesondere gleich der ersten Gesamtspannung, nur bzw. allein der ersten Anzahl von Akkumulatorzellen ausgebildet. Der Akkupack ist zur Versorgung mit der zweiten Spannung definiert durch eine zweite Gesamtspannung, insbesondere einen zweiten Wert der zweiten Gesamtspannung, insbesondere gleich der zweiten Gesamtspannung, der ersten Anzahl von Akkumulatorzellen und der zweiten Anzahl von Akkumulatorzellen, insbesondere miteinander bzw. gemeinsam bzw. zusammen und/oder fest bzw. zeitlich dauerhaft und/oder unmittelbar, elektrisch seriell bzw. in Reihe verschaltet bzw. geschaltet bzw. verbunden ausgebildet. Dies ermöglicht, dass die zweite Spannung höher als die erste Spannung ist.

In einer Weiterbildung der Erfindung umfasst bzw. weist die Mehrzahl von Akkumulatorzellen die erste Anzahl von Akkumulatorzellen und die zweite Anzahl von Akkumulatorzellen auf. Die erste Anzahl von Akkumulatorzellen und das erste Packpaar sind, insbesondere miteinander und/oder fest bzw. zeitlich dauerhaft und/oder unmittelbar, elektrisch parallel verschaltet bzw. geschaltet bzw. verbunden. Die erste Anzahl von Akkumulatorzellen und die zweite Anzahl von Akkumulatorzellen, insbesondere miteinander bzw. gemeinsam bzw. zusammen und/oder fest bzw. zeitlich dauerhaft und/oder unmittelbar, elektrisch seriell bzw. in Reihe verschaltet bzw. geschaltet bzw. verbunden und das zweite Packpaar sind, insbesondere miteinander und/oder fest bzw. zeitlich dauerhaft und/oder unmittelbar, elektrisch parallel verschaltet bzw. geschaltet bzw. verbunden. Dies ermöglicht, dass der Akkupack durch die Berührung des ersten Packpaars zur Versorgung mit der ersten Spannung ausgebildet ist, und dass der Akkupack durch die Berührung des zweiten Packpaars zur Versorgung mit der zweiten Spannung ausgebildet ist. In anderen Worten: Dies ermöglicht die Definierung der Versorgung mit der ersten Spannung durch die Berührung des ersten Packpaars und mit der zweiten Spannung durch die Berührung des zweiten Packpaars. Insbesondere kann ein Packleistungskontakt des ersten Packpaars mit einem endseitigen Zellkontakt der ersten Anzahl von Akkumulatorzellen, insbesondere unmittelbar, elektrisch verbunden bzw. auf einem, insbesondere selben, Potential sein, und ein anderer Packleistungskontakt des ersten Packpaars kann mit einem anderen endseitigen Zellkontakt der ersten Anzahl von Akkumulatorzellen, insbesondere unmittelbar, elektrisch verbunden bzw. auf einem, insbesondere selben, Potential sein. Zusätzlich oder alternativ kann ein Packleistungskontakt des zweiten Packpaars mit einem endseitigen Zellkontakt der ersten Anzahl von Akkumulatorzellen und der zweiten Anzahl von Akkumulatorzellen, insbesondere unmittelbar, elektrisch verbunden bzw. auf einem, insbesondere selben, Potential sein, und ein anderer Packleistungskontakt des zweiten Packpaars kann mit einem anderen endseitigen Zellkontakt der ersten Anzahl von Akkumulatorzellen und der zweiten Anzahl von Akkumulatorzellen, insbesondere unmittelbar, elektrisch verbunden bzw. auf einem, insbesondere selben, Potential sein.

In einer Ausgestaltung der Erfindung umfasst bzw. weist die Leistungsübertragungseinrichtung, insbesondere nur, einen, insbesondere einzigen, Gleichspannungswandler bzw. DC/DC-Wandler bzw. Gleichstromsteller auf, insbesondere ist der Gleichspannungswandler. Insbesondere kann der Gleichspannungswandler bidirektional sein.

In einer Ausgestaltung der Erfindung ist die Leistungsübertragungseinrichtung, insbesondere elektrisch, einstellbar, insbesondere steuer- und/oder regelbar. Der Akkupack umfasst bzw. weist eine, insbesondere elektrische, Einstelleinrichtung, insbesondere eine Steuer- und/oder Regeleinrichtung, auf. Die Einstelleinrichtung ist dazu ausgebildet bzw. konfiguriert die Leistungsübertragungseinrichtung derart, insbesondere automatisch und/oder elektrisch, einzustellen, insbesondere zu steuern und/oder zu regeln, dass der erste Ladezustand und/oder der zweite Ladezustand eingestellt werden/wird, insbesondere angeglichen werden. Insbesondere kann die Einstelleinrichtung zum Einstellen basierend auf Betriebsdaten bzw. Nutzungsdaten, insbesondere eines zeitlich vorhergehenden Betriebs bzw. einer zeitlich vorhergehenden Nutzung, des Akkupacks ausgebildet sein. Zusätzlich oder alternativ kann die Einstelleinrichtung zum, insbesondere kabellosen, Empfang einer Einstellinformation, insbesondere basierend auf, insbesondere den Betriebsdaten bzw. den Nutzungsdaten, insbesondere des zeitlich vorhergehenden Betriebs bzw. der zeitlich vorhergehenden Nutzung, des Akkupacks, von einem externen, insbesondere mobilen, Gerät, insbesondere einem Smartphone, zum Einstellen ausgebildet sein. Insbesondere kann die Merkmalskombination, insbesondere dieses Absatzes, unabhängig bzw. losgelöst von den Merkmalen des Anspruchs 1, insbesondere dass der Akkupack durch die Berührung des ersten Packpaars zur Versorgung mit der ersten Spannung ausgebildet ist, und dass der Akkupack durch die Berührung des zweiten Packpaars zur Versorgung mit der zweiten Spannung ausgebildet ist, eine selbst- bzw. eigenständige Erfindung sein bzw. darstellen.

In einer Weiterbildung der Erfindung ist die erste Spannung eine, insbesondere erste, Nennspannung von minimal 10 V, insbesondere minimal 30 V, und/oder maximal 43 V. Zusätzlich oder alternativ ist die zweite Spannung eine, insbesondere zweite, Nennspannung von minimal 18V, insbesondere minimal 43 V, und/oder maximal 72 V, insbesondere maximal 54 V.

Zusätzlich oder alternativ kann die zweite Spannung minimal 10 % (Prozent), insbesondere minimal 20 %, insbesondere minimal 30 %, höher als die erste Spannung sein.

Weiter zusätzlich oder alternativ kann der Akkupack, insbesondere die Mehrzahl von Akkumulatorzellen, eine maximale elektrische Antriebs- und/oder Aufladeleistung von minimal 10 Watt (W), insbesondere minimal 100 W, insbesondere minimal 1 Kilowatt (kW), insbesondere minimal 2 kW, und/oder maximal 10 kW, insbesondere maximal 5 kW, insbesondere 3 kW, aufweisen bzw. haben.

Weiter zusätzlich oder alternativ kann der Akkupack, insbesondere die Mehrzahl von Akkumulatorzellen, einen, insbesondere elektrischen, maximalen Energieinhalt von minimal 100 Wattstunden (Wh), insbesondere minimal 200 Wh, und/oder maximal 4000 Wh, insbesondere maximal 2000 Wh, insbesondere maximal 1000 Wh, insbesondere maximal 500 Wh, insbesondere 337 Wh, aufweisen bzw. haben.

In einer Weiterbildung, insbesondere einer Ausgestaltung, der Erfindung umfasst bzw. weist der Akkupack, insbesondere nur, ein, insbesondere einziges und/oder gemeinsames, Packgehäuse, insbesondere Akkupackgehäuse, auf. Die Mehrzahl von Akkumulatorzellen ist, insbesondere und die Leistungsübertragungseinrichtung und/oder die Einstelleinrichtung, soweit vorhanden, sind, in dem Packgehäuse angeordnet. Insbesondere sind die Packleistungskontakte an dem Packgehäuse, insbesondere einem Rand des Packgehäuses, angeordnet. Dies ermöglicht einen Zusammenhalten der Mehrzahl von Akkumulatorzellen und/oder einen Schutz, insbesondere der Mehrzahl von Akkumulatorzellen, vor äußeren Einflüssen. Insbesondere kann das Packgehäuse fest sein.

Das erfindungsgemäße System umfasst bzw. weist einen, insbesondere den, Akkupack wie vorhergehend genannt und das erste Bearbeitungsgerät und/oder das erste Ladegerät und/oder das zweite Bearbeitungsgerät und/oder das zweite Ladegerät auf. Insbesondere kann das, insbesondere erste oder zweite, Bearbeitungsgerät oder das, insbesondere erste oder zweite, Ladegerät eine Akkuaufnahme, insbesondere einen Akkuschacht, aufweisen, wobei die Akkuaufnahme zum Aufnehmen des Akkupacks ausgebildet sein kann.

In einer Weiterbildung der Erfindung sind/ist das erste Bearbeitungsgerät und/oder das zweite Bearbeitungsgerät eine Säge, insbesondere eine Kettensäge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere oder ein Hochdruckreiniger.

Die erfindungsgemäße Verwendung ist eine Verwendung eines, insbesondere des, Akkupacks wie vorhergehend genannt, insbesondere eines, insbesondere des Systems wie vorhergehend genannt, mit dem ersten Bearbeitungsgerät und/oder dem ersten Ladegerät mit der ersten Spannung und/oder mit dem zweiten Bearbeitungsgerät und/oder dem zweiten Ladegerät mit der zweiten Spannung.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: einen schematische Ansicht, insbesondere einen Schaltplan, eines erfindungsgemäßen Systems aufweisend einen erfindungsgemäßen Akkupack, ein erstes Bearbeitungsgerät, ein erstes Ladegerät, ein zweites Bearbeitungsgerät und ein zweites Ladegerät,
- Fig. 2: eine erfindungsgemäße Verwendung des Akkupacks mit dem ersten Bearbeitungsgerät der Fig. 1 mit einer ersten Spannung, und
- Fig. 3: die erfindungsgemäße Verwendung des Akkupacks mit dem zweiten Bearbeitungsgerät der Fig. 1 mit einer zweiten Spannung.

### DETAILLIERTE BESCHREIBUNG DER AUSFÜHRUNGSBEISPIELE

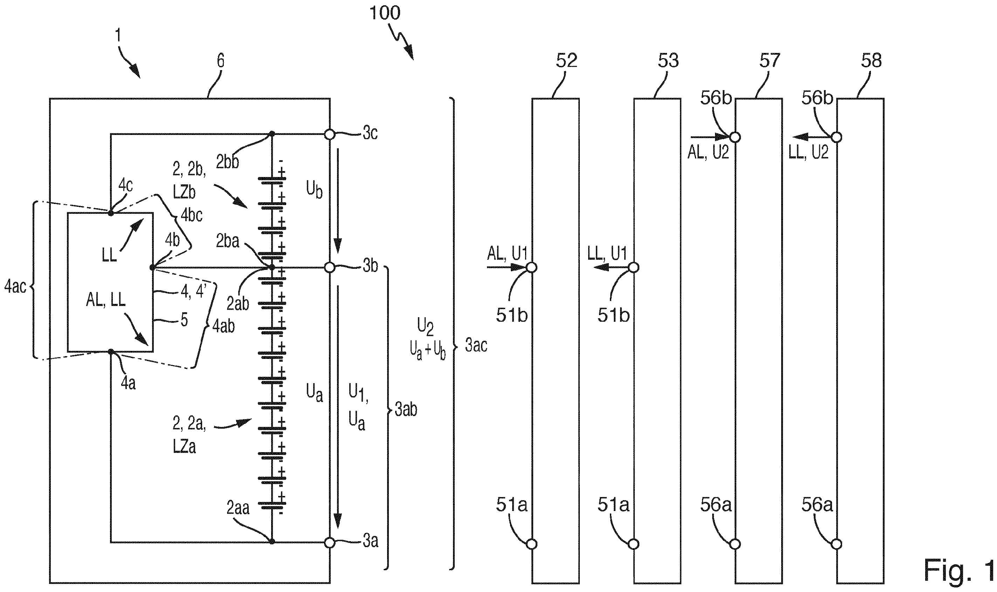

Fig. 1 bis 3 zeigen ein erfindungsgemäßes System 100. Das System 100 weist einen erfindungsgemäßen Akkupack 1 und ein erstes elektrisch angetriebenes Bearbeitungsgerät 52 und/oder ein erstes Ladegerät 53 und/oder ein zweites elektrisch angetriebenes Bearbeitungsgerät 57 und/oder ein zweites Ladegerät 58 auf.

Der Akkupack 1 weist eine Mehrzahl von Akkumulatorzellen 2 und mindestens drei Packleistungskontakte 3a, 3b, 3c auf. Ein erstes Packpaar 3ab der Packleistungskontakte 3a, 3b ist zur Berührung von Geräteleistungskontakten 51a, 51b des ersten elektrisch angetriebenen Bearbeitungsgeräts 52 und/oder des ersten Ladegeräts 53 ausgebildet, insbesondere berührt. Der Akkupack 1 ist durch die Berührung zur Versorgung des ersten Bearbeitungsgeräts 52 mit elektrischer Antriebsleistung AL mit einer ersten elektrischen Spannung U1 von mindestens einem Teil der Mehrzahl von Akkumulatorzellen 2 und/oder mindestens eines, in dem gezeigten Ausführungsbeispiel des, selben Teils der Mehrzahl von Akkumulatorzellen 2 mit elektrischer Aufladeleistung LL mit der ersten Spannung U1 von dem ersten Ladegerät 53 mittels des ersten Packpaars 3ab ausgebildet, insbesondere versorgt. Ein von dem ersten mindestens, in dem gezeigten Ausführungsbeispiel nur, in Teilen verschiedenes zweites Packpaar 3ac der Packleistungskontakte 3a, 3c ist zur Berührung von Geräteleistungskontakten 56a, 56b des zweiten elektrisch angetriebenen Bearbeitungsgeräts 57 und/oder des zweiten Ladegeräts 58 ausgebildet, insbesondere berührt. Der Akkupack 1 ist durch die Berührung zur Versorgung des zweiten Bearbeitungsgeräts 57 mit elektrischer Antriebsleistung AL mit einer gegenüber der ersten höheren zweiten elektrischen Spannung U2 von mindestens einem, in dem gezeigten Ausführungsbeispiel dem, selben Teil der Mehrzahl von Akkumulatorzellen 2 und/oder mindestens eines, insbesondere des, selben Teils der Mehrzahl von Akkumulatorzellen 2 mit elektrischer Aufladeleistung LL mit der zweiten Spannung U2 von dem zweiten Ladegerät 58 mittels des zweiten Packpaars 3ac ausgebildet, insbesondere versorgt.

In dem gezeigten Ausführungsbeispiel weist der Akkupack 1 genau drei Packleistungskontakte 3a, 3b, 3c auf. In alternativen Ausführungsbeispielen kann der Akkupack mindestens vier Packleistungskontakte aufweisen. Zusätzlich oder alternativ kann in alternativen Ausführungsbeispielen ein von dem ersten und/oder dem zweiten mindestens, insbesondere jeweils nur, in Teilen verschiedenes drittes Packpaar der Packleistungskontakte zur Berührung von Geräteleistungskontakten, insbesondere jeweils, eines dritten elektrisch angetriebenen Bearbeitungsgeräts und/oder eines dritten, insbesondere elektrischen, Ladegeräts ausgebildet sein, insbesondere berührt. Der Akkupack kann, insbesondere nur und/oder automatisch, durch die Berührung zur Versorgung des dritten Bearbeitungsgeräts mit elektrischer Antriebsleistung mit, insbesondere nur, einer, insbesondere von der ersten und/oder der zweiten verschiedenen, dritten elektrischen Spannung, insbesondere einem dritten Wert der dritten Spannung und/oder Nennspannung, von mindestens einem, insbesondere dem, selben Teil der Mehrzahl von Akkumulatorzellen und/oder mindestens eines, insbesondere des, selben Teils der Mehrzahl von Akkumulatorzellen mit elektrischer Aufladeleistung mit, insbesondere nur, der dritten Spannung von dem dritten Ladegerät mittels des dritten Packpaars ausgebildet sein, insbesondere versorgt.

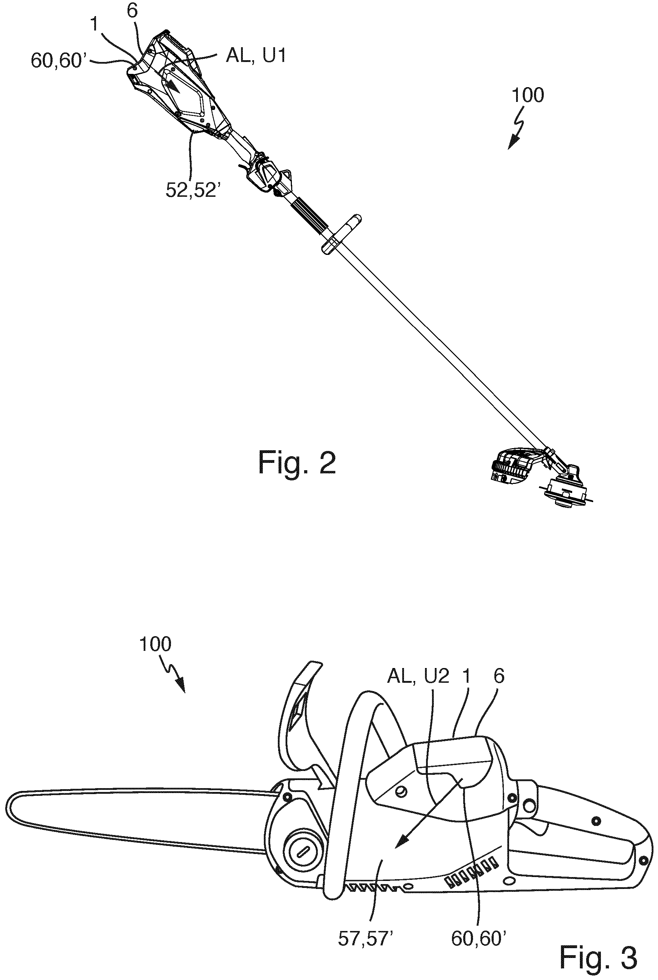

Fig. 2 zeigt eine erfindungsgemäße Verwendung des Akkupacks 1 mit dem ersten Bearbeitungsgerät 52 mit der ersten Spannung U1.

Fig. 3 zeigt eine erfindungsgemäße Verwendung des Akkupacks 1 mit dem zweiten Bearbeitungsgerät 57 mit der zweiten Spannung U2.

In dem gezeigten Ausführungsbeispiel ist das erste Bearbeitungsgerät 52 ein Freischneider 52', und das zweite Bearbeitungsgerät 57 ist eine Säge 57'. In alternativ Ausführungsbeispielen können/kann das erste Bearbeitungsgerät und/oder das zweite Bearbeitungsgerät eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere oder ein Hochdruckreiniger sein.

Insbesondere zu einem Zeitpunkt berührt das erste Packpaar 3ab die Geräteleistungskontakte 51a, 51b des ersten Bearbeitungsgeräts 52. Der Akkupack 1 versorgt durch die Berührung das erste Bearbeitungsgerät 52 mit Antriebsleistung AL mit der ersten Spannung U1 von mindestens dem Teil der Mehrzahl von Akkumulatorzellen 2 mittels des ersten Packpaars 3ab.

Alternativ bzw. zu einem anderen Zeitpunkt berührt das erste Packpaar 3ab die Geräteleistungskontakte 51a, 51b des ersten Ladegeräts 53. Der Akkupack 1 versorgt durch die Berührung mindestens den Teil der Mehrzahl von Akkumulatorzellen 2 mit Aufladeleistung LL mit der ersten Spannung U1 von dem ersten Ladegerät 53 mittels des ersten Packpaars 3ab.

Weiter alternativ bzw. zu einem weiteren anderen Zeitpunkt berührt das zweite Packpaar 3ac die Geräteleistungskontakte 56a, 56b des zweiten Bearbeitungsgeräts 57. Der Akkupack 1 versorgt durch die Berührung das zweite Bearbeitungsgerät 57 mit Antriebsleistung AL mit der zweiten Spannung U2 von mindestens dem Teil der Mehrzahl von Akkumulatorzellen 2 mittels des zweiten Packpaars 3ac.

Nochmals weiter alternativ bzw. zu einem nochmals weiteren anderen Zeitpunkt berührt das zweite Packpaar 3ac die Geräteleistungskontakte 56a, 56b des zweiten Ladegeräts 58. Der Akkupack 1 versorgt durch die Berührung mindestens den Teil der Mehrzahl von Akkumulatorzellen 2 mit Aufladeleistung LL mit der zweiten Spannung U2 von dem zweiten Ladegerät 58 mittels des zweiten Packpaars 3ac.

Im Detail ist der Akkupack 1 zur Versorgung mit nur der ersten Spannung U1 mittels des ersten Packpaars 3ab ausgebildet, insbesondere versorgt. Der Akkupack 1 ist zur Versorgung mit nur der zweiten Spannung U2 mittels des zweiten Packpaars 3ac ausgebildet, insbesondere versorgt.

Des Weiteren weist die Mehrzahl von Akkumulatorzellen 2 eine erste Anzahl von Akkumulatorzellen 2a und/oder eine zweite Anzahl von Akkumulatorzellen 2b auf.

In dem gezeigten Ausführungsbeispiel weist die erste Anzahl von Akkumulatorzellen 2a zehn Akkumulatorzellen auf. In alternativen Ausführungsbeispielen kann die erste Anzahl von Akkumulatorzellen nur eine einzige Akkumulatorzelle oder mindestens zwei Akkumulatorzellen aufweisen.

Außerdem weist in dem gezeigten Ausführungsbeispiel die zweite Anzahl von Akkumulatorzellen 2b vier Akkumulatorzellen auf. In alternativen Ausführungsbeispielen kann die zweite Anzahl von Akkumulatorzellen nur eine einzige Akkumulatorzelle oder mindestens zwei Akkumulatorzellen aufweisen.

Zusätzlich ist der Akkupack 1 zur Versorgung mit der ersten Spannung U1 definiert durch eine erste Gesamtspannung Ua, in dem gezeigten Ausführungsbeispiel gleich der ersten Gesamtspannung Ua, nur der ersten Anzahl von Akkumulatorzellen 2a ausgebildet, insbesondere versorgt. Der Akkupack 1 ist zur Versorgung mit der zweiten Spannung U2 definiert durch eine zweite Gesamtspannung Ua+Ub, in dem gezeigten Ausführungsbeispiel gleich der zweiten Gesamtspannung Ua+Ub, der ersten Anzahl von Akkumulatorzellen 2a und der zweiten Anzahl von Akkumulatorzellen 2b, in dem gezeigten Ausführungsbeispiel fest, elektrisch seriell verschaltet ausgebildet, insbesondere versorgt.

In alternativen Ausführungsbeispielen kann der Akkupack zur Versorgung mit der dritten Spannung definiert durch eine dritte Gesamtspannung, insbesondere gleich der dritten Gesamtspannung, nur der zweiten Anzahl von Akkumulatorzellen ausgebildet sein, insbesondere versorgt.

Weiter zusätzlich sind die erste Anzahl von Akkumulatorzellen 2a und das erste Packpaar 3ab, in dem gezeigten Ausführungsbeispiel fest, elektrisch parallel verschaltet. Die erste Anzahl von Akkumulatorzellen 2a und die zweite Anzahl von Akkumulatorzellen 2b, in dem gezeigten Ausführungsbeispiel fest, elektrisch seriell verschaltet und das zweite Packpaar 3ac sind, in dem gezeigten Ausführungsbeispiel fest, elektrisch parallel verschaltet.

In dem gezeigten Ausführungsbeispiel weist der Akkupack 1 einen ersten Packleistungskontakt 3a, einen zweiten Packleistungskontakt 3b und einen dritten Packleistungskontakt 3c auf. Die erste Anzahl von Akkumulatorzellen 2a weist einen ersten Zellkontakt 2aa und einen zweiten Zellkontakt 2ab auf. Die zweite Anzahl von Akkumulatorzellen 2b weist einen ersten Zellkontakt 2ba und einen zweiten Zellkontakt 2bb auf. Der erste Packleistungskontakt 3a ist mit dem ersten Zellkontakt 2aa der ersten Anzahl von Akkumulatorzellen 2a, insbesondere unmittelbar, elektrisch verbunden bzw. auf einem, insbesondere selben, Potential. Der zweite Packleistungskontakt 3b ist mit dem zweiten Zellkontakt 2ab der ersten Anzahl von Akkumulatorzellen 2a und dem ersten Zellkontakt 2ba der zweiten Anzahl von Akkumulatorzellen 2b, insbesondere unmittelbar, elektrisch verbunden bzw. auf einem, insbesondere selben, Potential. Der dritte Packleistungskontakt 3c ist mit dem zweiten Zellkontakt 2bb der zweiten Anzahl von Akkumulatorzellen 2b, insbesondere unmittelbar, elektrisch verbunden bzw. auf einem, insbesondere selben, Potential.

Nochmals weiter zusätzlich weist der Akkupack 1 eine Leistungsübertragungseinrichtung 4 auf. Die Leistungsübertragungseinrichtung 4 ist zur Übertragung von elektrischer Auflade-und/oder Antriebsleistung LL, AL von dem ersten Packpaar 3ab und/oder der ersten Anzahl von Akkumulatorzellen 2a zu der zweiten Anzahl von Akkumulatorzellen 2b und/oder von der zweiten Anzahl von Akkumulatorzellen 2b zu dem ersten Packpaar 3ab und/oder der ersten Anzahl von Akkumulatorzellen 2a, insbesondere zu einer Einstellung von einem ersten Ladezustand LZa der ersten Anzahl von Akkumulatorzellen 2a und/oder einem zweiten Ladezustand LZb der zweiten Anzahl von Akkumulatorzellen 2b, ausgebildet, insbesondere überträgt.

Im Detail weist die Leistungsübertragungseinrichtung 4 einen Gleichspannungswandler 4' auf, insbesondere ist der Gleichspannungswandler 4'.

Zudem weist die Leistungsübertragungseinrichtung 4 mindestens drei Ein- und/oder Ausgänge 4a, 4b, 4c auf. Ein erstes Übertragungspaar 4ab der Ein- und/oder Ausgänge 4a, 4b und die erste Anzahl von Akkumulatorzellen 2a und/oder das erste Packpaar 3ab sind, in dem gezeigten Ausführungsbeispiel fest, elektrisch parallel verschaltet. Zusätzlich oder alternativ sind ein von dem ersten mindestens, in dem gezeigten Ausführungsbeispiel nur, in Teilen verschiedenes zweites Übertragungspaar 4bc der Ein- und/oder Ausgänge 4b, 4c und die zweite Anzahl von Akkumulatorzellen 2b, in dem gezeigten Ausführungsbeispiel fest, elektrisch parallel verschaltet. Weiter zusätzlich oder alternativ sind ein von dem ersten und/oder dem zweiten mindestens, in dem gezeigten Ausführungsbeispiel jeweils nur, in Teilen verschiedenes drittes Übertragungspaar 4ac der Ein- und/oder Ausgänge 4a, 4c und die erste Anzahl von Akkumulatorzellen 2a und die zweite Anzahl von Akkumulatorzellen 2b, in dem gezeigten Ausführungsbeispiel fest, elektrisch seriell verschaltet und/oder das zweite Packpaar 3ac, in dem gezeigten Ausführungsbeispiel fest, elektrisch parallel verschaltet.

In dem gezeigten Ausführungsbeispiel weist die Leistungsübertragungseinrichtung 4 genau drei Ein- und/oder Ausgänge 4a, 4b, 4c auf. In alternativen Ausführungsbeispielen kann die Leistungsübertragungseinrichtung mindestens vier Ein- und/oder Ausgänge aufweisen.

Des Weiteren weist in dem gezeigten Ausführungsbeispiel die Leistungsübertragungseinrichtung 4 einen ersten Ein- und/oder Ausgang 4a, einen zweiten Ein- und/oder Ausgang 4b und einen dritten Ein- und/oder Ausgang 4c auf. Der erste Ein- und/oder Ausgang 4a ist mit dem ersten Zellkontakt 2aa der ersten Anzahl von Akkumulatorzellen 2a und/oder dem ersten Packleistungskontakt 3a, insbesondere unmittelbar, elektrisch verbunden bzw. auf einem, insbesondere selben, Potential. Der zweite Ein- und/oder Ausgang 4b ist mit dem zweiten Zellkontakt 2ab der ersten Anzahl von Akkumulatorzellen 2a und dem ersten Zellkontakt 2ba der zweiten Anzahl von Akkumulatorzellen 2b und/oder dem zweiten Packleistungskontakt 3b, insbesondere unmittelbar, elektrisch verbunden bzw. auf einem, insbesondere selben, Potential. Der dritte Ein- und/oder Ausgang 4c ist mit dem zweiten Zellkontakt 2bb der zweiten Anzahl von Akkumulatorzellen 2b und/oder dem dritten Packleistungskontakt 3c, insbesondere unmittelbar, elektrisch verbunden bzw. auf einem, insbesondere selben, Potential.

Außerdem ist die Leistungsübertragungseinrichtung 4 einstellbar. Der Akkupack 4 weist eine Einstelleinrichtung 5 auf. Die Einstelleinrichtung 5 ist dazu ausgebildet die Leistungsübertragungseinrichtung 4 derart einzustellen, insbesondere stellt ein, dass der erste Ladezustand LZa und/oder der zweite Ladezustand LZb eingestellt werden/wird.

Weiter ist die erste Spannung U1 eine Nennspannung von minimal 10 V, insbesondere minimal 30 V, und/oder maximal 43 V, in dem gezeigten Ausführungsbeispiel 36 V. Zusätzlich oder alternativ ist die zweite Spannung U2 eine Nennspannung von minimal 18V, insbesondere minimal 43 V, und/oder maximal 72 V, insbesondere maximal 54 V, in dem gezeigten Ausführungsbeispiel 50,4 V.

Zudem weist der Akkupack 1 ein Packgehäuse 6 auf. Die Mehrzahl von Akkumulatorzellen 2 ist, insbesondere und die Leistungsübertragungseinrichtung 4 und/oder die Einstelleinrichtung 5 sind, in dem Packgehäuse 6 angeordnet. In dem gezeigten Ausführungsbeispiel sind die Packleistungskontakte 3a, 3b, 3c an dem Packgehäuse 6 angeordnet.

Im Übrigen weist das, insbesondere erste oder zweite, Bearbeitungsgerät 52, 57 oder das, insbesondere erste oder zweite, Ladegerät 53, 58 eine Akkuaufnahme 60, insbesondere einen Akkuschacht 60', auf. Die Akkuaufnahme 60 zum Aufnehmen des Akkupacks 1 ausgebildet, insbesondere ist der Akkupack 1 aufgenommen.

Wie die gezeigten und oben erläuterten Ausführungsbeispiele deutlich machen, stellt die Erfindung einen vorteilhaften Akkupack, wobei der Akkupack verbesserte Eigenschaften aufweist, ein vorteilhaftes System aufweisend einen solchen Akkupack und eine vorteilhafte Verwendung eines solchen Akkupacks bereit.

## Patentansprüche

1. Akkupack (1), wobei der Akkupack (1) aufweist:
- eine Mehrzahl von Akkumulatorzellen (2), und
- mindestens drei Packleistungskontakte (3a, 3b, 3c),
- wobei ein erstes Packpaar (3ab) der Packleistungskontakte (3a, 3b) zur Berührung von Geräteleistungskontakten (51a, 51b) eines ersten elektrisch angetriebenen Bearbeitungsgeräts (52) und/oder eines ersten Ladegeräts (53) ausgebildet ist, wobei der Akkupack (1) durch die Berührung zur Versorgung des ersten Bearbeitungsgeräts (52) mit elektrischer Antriebsleistung (AL) mit einer ersten elektrischen Spannung (U1) von mindestens einem Teil der Mehrzahl von Akkumulatorzellen (2) und/oder mindestens eines selben Teils der Mehrzahl von Akkumulatorzellen (2) mit elektrischer Aufladeleistung (LL) mit der ersten Spannung (U1) von dem ersten Ladegerät (53) mittels des ersten Packpaars (3ab) ausgebildet ist, und
- wobei ein von dem ersten mindestens in Teilen verschiedenes zweites Packpaar (3ac) der Packleistungskontakte (3a, 3c) zur Berührung von Geräteleistungskontakten (56a, 56b) eines zweiten elektrisch angetriebenen Bearbeitungsgeräts (57) und/oder eines zweiten Ladegeräts (58) ausgebildet ist, wobei der Akkupack (1) durch die Berührung zur Versorgung des zweiten Bearbeitungsgeräts (57) mit elektrischer Antriebsleistung (AL) mit einer gegenüber der ersten höheren zweiten elektrischen Spannung (U2) von mindestens einem selben Teil der Mehrzahl von Akkumulatorzellen (2) und/oder mindestens eines selben Teils der Mehrzahl von Akkumulatorzellen (2) mit elektrischer Aufladeleistung (LL) mit der zweiten Spannung (U2) von dem zweiten Ladegerät (58) mittels des zweiten Packpaars (3ac) ausgebildet ist,
- wobei die Mehrzahl von Akkumulatorzellen (2) eine erste Anzahl von Akkumulatorzellen (2a) und/oder eine zweite Anzahl von Akkumulatorzellen (2b) aufweist,
- **dadurch gekennzeichnet, dass** der Akkupack (1) eine Leistungsübertragungseinrichtung (4) aufweist,
- wobei die Leistungsübertragungseinrichtung (4) zur Übertragung von elektrischer Auflade- und/oder Antriebsleistung (LL, AL) von dem ersten Packpaar (3ab) und/oder der ersten Anzahl von Akkumulatorzellen (2a) zu der zweiten Anzahl von Akkumulatorzellen (2b) und/oder von der zweiten Anzahl von Akkumulatorzellen (2b) zu dem ersten Packpaar (3ab) und/oder der ersten Anzahl von Akkumulatorzellen (2a), insbesondere zu einer Einstellung von einem ersten Ladezustand (LZa) der ersten Anzahl von Akkumulatorzellen (2a) und/oder einem zweiten Ladezustand (LZb) der zweiten Anzahl von Akkumulatorzellen (2b), ausgebildet ist,
- wobei die Leistungsübertragungseinrichtung (4) mindestens drei Ein- und/oder Ausgänge (4a, 4b, 4c) aufweist,
- wobei ein erstes Übertragungspaar (4ab) der Ein- und/oder Ausgänge (4a, 4b) und die erste Anzahl von Akkumulatorzellen (2a) und/oder das erste Packpaar (3ab), insbesondere fest, elektrisch parallel verschaltet sind, und/oder
- wobei ein von dem ersten mindestens in Teilen verschiedenes zweites Übertragungspaar (4bc) der Ein- und/oder Ausgänge (4b, 4c) und die zweite Anzahl von Akkumulatorzellen (2b), insbesondere fest, elektrisch parallel verschaltet sind, und/oder
- wobei ein von dem ersten und/oder dem zweiten mindestens in Teilen verschiedenes drittes Übertragungspaar (4ac) der Ein- und/oder Ausgänge (4a, 4c) und die erste Anzahl von Akkumulatorzellen (2a) und die zweite Anzahl von Akkumulatorzellen (2b), insbesondere fest, elektrisch seriell verschaltet und/oder das zweite Packpaar (3ac), insbesondere fest, elektrisch parallel verschaltet sind.

2. Akkupack (1) nach Anspruch 1,
- wobei der Akkupack (1) zur Versorgung mit nur der ersten Spannung (U1) mittels des ersten Packpaars (3ab) ausgebildet ist, und
- wobei der Akkupack (1) zur Versorgung mit nur der zweiten Spannung (U2) mittels des zweiten Packpaars (3ac) ausgebildet ist.

3. Akkupack (1) nach einem der vorhergehenden Ansprüche,
- wobei die Mehrzahl von Akkumulatorzellen (2) die erste Anzahl von Akkumulatorzellen (2a) und die zweite Anzahl von Akkumulatorzellen (2b) aufweist,
- wobei der Akkupack (1) zur Versorgung mit der ersten Spannung (U1) definiert durch eine erste Gesamtspannung (Ua), insbesondere gleich der ersten Gesamtspannung (Ua), nur der ersten Anzahl von Akkumulatorzellen (2a) ausgebildet ist, und
- wobei der Akkupack (1) zur Versorgung mit der zweiten Spannung (U2) definiert durch eine zweite Gesamtspannung (Ua+Ub), insbesondere gleich der zweiten Gesamtspannung (Ua+Ub), der ersten Anzahl von Akkumulatorzellen (2a) und der zweiten Anzahl von Akkumulatorzellen (2b), insbesondere fest, elektrisch seriell verschaltet ausgebildet ist.

4. Akkupack (1) nach einem der vorhergehenden Ansprüche,
- wobei die Mehrzahl von Akkumulatorzellen (2) die erste Anzahl von Akkumulatorzellen (2a) und die zweite Anzahl von Akkumulatorzellen (2b) aufweist,
- wobei die erste Anzahl von Akkumulatorzellen (2a) und das erste Packpaar (3ab), insbesondere fest, elektrisch parallel verschaltet sind, und
- wobei die erste Anzahl von Akkumulatorzellen (2a) und die zweite Anzahl von Akkumulatorzellen (2b), insbesondere fest, elektrisch seriell verschaltet und das zweite Packpaar (3ac), insbesondere fest, elektrisch parallel verschaltet sind.

5. Akkupack (1) nach einem der vorhergehenden Ansprüche,
- wobei die Leistungsübertragungseinrichtung (4) einen Gleichspannungswandler (4') aufweist, insbesondere der Gleichspannungswandler (4') ist.

6. Akkupack (1) nach einem der vorhergehenden Ansprüche,
- wobei die Leistungsübertragungseinrichtung (4) einstellbar ist, und
- wobei der Akkupack (1) eine Einstelleinrichtung (5) aufweist, wobei die Einstelleinrichtung (5) dazu ausgebildet ist die Leistungsübertragungseinrichtung (4) derart einzustellen, dass der erste Ladezustand (LZa) und/oder der zweite Ladezustand (LZb) eingestellt werden/wird.

7. Akkupack (1) nach einem der vorhergehenden Ansprüche,
- wobei die erste Spannung (U1) eine Nennspannung von minimal 10 V, insbesondere minimal 30 V, und/oder maximal 43 V ist, und/oder
- wobei die zweite Spannung (U2) eine Nennspannung von minimal 18V, insbesondere minimal 43 V, und/oder maximal 72 V, insbesondere maximal 54 V, ist.

8. Akkupack (1) nach einem der vorhergehenden Ansprüche, insbesondere Anspruch 6,
- wobei der Akkupack (1) ein Packgehäuse (6) aufweist, wobei die Mehrzahl von Akkumulatorzellen (2), insbesondere und die Leistungsübertragungseinrichtung (4) und/oder die Einstelleinrichtung (5), in dem Packgehäuse (6) angeordnet ist, insbesondere sind, insbesondere und wobei die Packleistungskontakte (3a, 3b, 3c) an dem Packgehäuse (6) angeordnet sind.

9. System (100), wobei das System (100) aufweist,
- einen Akkupack (1) nach einem der vorhergehenden Ansprüche, und
- das erste Bearbeitungsgerät (52) und/oder das erste Ladegerät (53) und/oder das zweite Bearbeitungsgerät (57) und/oder das zweite Ladegerät (58).

10. System (1) nach Anspruch 9,
- wobei das erste Bearbeitungsgerät (52) und/oder das zweite Bearbeitungsgerät (57) eine Säge (57'), ein Hoch-Entaster, ein Freischneider (52'), eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere oder ein Hochdruckreiniger sind/ist.

11. Verwendung eines Akkupacks (1) nach einem der Ansprüche 1 bis 8, insbesondere eines Systems nach Anspruch 9 oder 10, mit dem ersten Bearbeitungsgerät (52) und/oder dem ersten Ladegerät (53) mit der ersten Spannung (U1) und/oder mit dem zweiten Bearbeitungsgerät (57) und/oder dem zweiten Ladegerät (58) mit der zweiten Spannung (U2).

## Claims

1. Battery pack (1), wherein the battery pack (1) has:
- a plurality of battery cells (2), and
- at least three pack power contacts (3a, 3b, 3c),
- wherein a first pack pair (3ab) of the pack power contacts (3a, 3b) is designed for making contact with device power contacts (51a, 51b) of a first electrically driven work device (52) and/or a first charging device (53), wherein the battery pack (1) is designed for supplying, due to contact being made, the first work device (52) with electrical drive power (AL) with a first electrical voltage (U1) from at least a portion of the plurality of battery cells (2) and/or supplying, due to contact being made, at least a same portion of the plurality of battery cells (2) with electrical charging power (LL) with the first voltage (U1) from the first charging device (53) by means of the first pack pair (3ab), and
- wherein a second pack pair (3ac) of the pack power contacts (3a, 3c), which second pack pair is different from the first at least in portions, is designed for making contact with device power contacts (56a, 56b) of a second electrically driven work device (57) and/or a second charging device (58), wherein the battery pack (1) is designed for supplying, due to contact being made, the second work device (57) with electrical drive power (AL) with a second electrical voltage (U2), which is higher than the first, from at least a same portion of the plurality of battery cells (2) and/or supplying, due to contact being made, at least a same portion of the plurality of battery cells (2) with electrical charging power (LL) with the second voltage (U2) from the second charging device (58) by means of the second pack pair (3ac),
- wherein the plurality of battery cells (2) has a first number of battery cells (2a) and/or a second number of battery cells (2b),
- **characterized in that** the battery pack (1) has a power transmission device (4),
- wherein the power transmission device (4) is designed for transmitting electrical charging and/or drive power (LL, AL) from the first pack pair (3ab) and/or the first number of battery cells (2a) to the second number of battery cells (2b) and/or from the second number of battery cells (2b) to the first pack pair (3ab) and/or the first number of battery cells (2a), in particular for adjusting a first state of charge (LZa) of the first number of battery cells (2a) and/or a second state of charge (LZb) of the second number of battery cells (2b),
- wherein the power transmission device (4) has at least three inputs and/or outputs (4a, 4b, 4c),
- wherein a first transmission pair (4ab) of the inputs and/or outputs (4a, 4b) and the first number of battery cells (2a) and/or the first pack pair (3ab) are interconnected, in particular permanently, electrically in parallel, and/or
- wherein a second transmission pair (4bc) of the inputs and/or outputs (4b, 4c), which second transmission pair is different from the first at least in portions, and the second number of battery cells (2b) are interconnected, in particular permanently, electrically in parallel, and/or
- wherein a third transmission pair (4ac) of the inputs and/or outputs (4a, 4c), which third transmission pair is different from the first and/or the second at least in portions, and the first number of battery cells (2a) and the second number of battery cells (2b) are interconnected, in particular permanently, electrically in series and/or the second pack pair (3ac) are interconnected, in particular permanently, electrically in parallel.

2. Battery pack (1) according to Claim 1,
- wherein the battery pack (1) is designed for supplying with only the first voltage (U1) by means of the first pack pair (3ab), and
- wherein the battery pack (1) is designed for supplying with only the second voltage (U2) by means of the second pack pair (3ac).

3. Battery pack (1) according to either of the preceding claims,
- wherein the plurality of battery cells (2) has the first number of battery cells (2a) and the second number of battery cells (2b),
- wherein the battery pack (1) is designed for supplying with the first voltage (U1) defined by a first total voltage (Ua), in particular equal to the first total voltage (Ua), only of the first number of battery cells (2a), and
- wherein the battery pack (1) is designed for supplying with the second voltage (U2) defined by a second total voltage (Ua+Ub), in particular equal to the second total voltage (Ua+Ub), of the first number of battery cells (2a) and the second number of battery cells (2b), interconnected, in particular permanently, electrically in series.

4. Battery pack (1) according to one of the preceding claims,
- wherein the plurality of battery cells (2) has the first number of battery cells (2a) and the second number of battery cells (2b),
- wherein the first number of battery cells (2a) and the first pack pair (3ab) are interconnected, in particular permanently, electrically in parallel, and
- wherein the first number of battery cells (2a) and the second number of battery cells (2b) are interconnected, in particular permanently, electrically in series and the second pack pair (3ac) are interconnected, in particular permanently, electrically in parallel.

5. Battery pack (1) according to one of the preceding claims,
- wherein the power transmission device (4) has a DC-to-DC converter (4'), in particular is the DC-to-DC converter (4').

6. Battery pack (1) according to one of the preceding claims,
- wherein the power transmission device (4) is adjustable, and
- wherein the battery pack (1) has an adjustment device (5), wherein the adjustment device (5) is designed to adjust the power transmission device (4) in such a way that the first state of charge (LZa) and/or the second state of charge (LZb) are/is adjusted.

7. Battery pack (1) according to one of the preceding claims,
- wherein the first voltage (U1) is a rated voltage of at least 10 V, in particular at least 30 V, and/or at most 43 V, and/or
- wherein the second voltage (U2) is a rated voltage of at least 18 V, in particular at least 43 V, and/or at most 72 V, in particular at most 54 V.

8. Battery pack (1) according to one of the preceding claims, in particular Claim 6,
- wherein the battery pack (1) has a pack housing (6), wherein the plurality of battery cells (2), in particular and the power transmission device (4) and/or the adjustment device (5), is, in particular are, arranged in the pack housing (6), in particular and wherein the pack power contacts (3a, 3b, 3c) are arranged on the pack housing (6).

9. System (100), wherein the system (100) has
- a battery pack (1) according to one of the preceding claims, and
- the first work device (52) and/or the first charging device (53) and/or the second work device (57) and/or the second charging device (58).

10. System (1) according to Claim 9,
- wherein the first work device (52) and/or the second work device (57) are/is a saw (57'), a pole pruner, a brush cutter (52'), a set of hedge shears, a hedge cutter, a blower device, a leaf blower, a lopper, a separation grinder, a sweeping device, a sweeping roller, a sweeping brush, a lawnmower, a scarifier, a set of grass shears or a high-pressure cleaner.

11. Use of a battery pack (1) according to one of Claims 1 to 8, in particular of a system according to Claim 9 or 10, with the first work device (52) and/or the first charging device (53) with the first voltage (U1) and/or with the second work device (57) and/or the second charging device (58) with the second voltage (U2).

## Revendications

1. Bloc d'accumulateurs (1), le bloc d'accumulateurs (1) présentant :
- une pluralité de cellules d'accumulateur (2), et
- au moins trois contacts de puissance de bloc (3a, 3b, 3c),
- une première paire de blocs (3ab) des contacts de puissance de bloc (3a, 3b) étant conçue pour venir au contact de contacts de puissance d'appareil (51a, 51b) d'un premier appareil de traitement à entraînement électrique (52) et/ou d'un premier appareil de charge (53), le bloc d'accumulateurs (1) étant conçu, par le biais dudit contact, pour l'alimentation du premier appareil de traitement (52) avec une puissance d'entraînement électrique (AL) à une première tension électrique (U1) d'au moins une partie de la pluralité de cellules d'accumulateur (2) et/ou d'au moins une même partie de la pluralité de cellules d'accumulateur (2) avec une puissance de charge électrique (LL) à la première tension (U1) du premier appareil de charge (53) au moyen de la première paire de bloc (3ab), et
- une deuxième paire de blocs (3ac) des contacts de puissance de bloc (3a, 3c), différente au moins en partie de la première, étant conçue pour venir au contact de contacts de puissance d'appareil (56a, 56b) d'un deuxième appareil de traitement à entraînement électrique (57) et/ou d'un deuxième appareil de charge (58), le bloc d'accumulateurs (1) étant conçu, par le biais dudit contact, pour l'alimentation du deuxième appareil de traitement (57) avec une puissance d'entraînement électrique (AL) à une deuxième tension électrique (U2) supérieure à la première, d'au moins une même partie de la pluralité de cellules d'accumulateur (2) et/ou d'au moins une même partie de la pluralité de cellules d'accumulateur (2) avec une puissance de charge électrique (LL) à la deuxième tension (U2) du deuxième appareil de charge (58) au moyen de la deuxième paire de blocs (3ac),
- la pluralité de cellules d'accumulateur (2) présentant un premier nombre de cellules d'accumulateur (2a) et/ou un deuxième nombre de cellules d'accumulateur (2b),
- **caractérisé en ce que** le bloc d'accumulateurs (1) présente un dispositif de transmission de puissance (4),
- le dispositif de transmission de puissance (4) étant conçu pour la transmission d'une puissance électrique de charge et/ou d'entraînement (LL, AL) de la première paire de blocs (3ab) et/ou du premier nombre de cellules d'accumulateur (2a) vers le deuxième nombre de cellules d'accumulateur (2b) et/ou du deuxième nombre de cellules d'accumulateur (2b) vers la première paire de blocs (3ab) et/ou du premier nombre de cellules d'accumulateur (2a), en particulier pour un réglage d'un premier état de charge (LZa) du premier nombre de cellules d'accumulateur (2a) et/ou d'un deuxième état de charge (LZb) du deuxième nombre de cellules d'accumulateur (2b),
- le dispositif de transmission de puissance (4) présentant au moins trois entrées et/ou sorties (4a, 4b, 4c),
- une première paire de transmission (4ab) des entrées et/ou sorties (4a, 4b) et le premier nombre de cellules d'accumulateur (2a) et/ou la première paire de blocs (3ab), en particulier fixes, étant connectés électriquement en parallèle, et/ou
- une deuxième paire de transmission (4bc) des entrées et/ou des sorties (4b, 4c), différente au moins en partie de la première, et le deuxième nombre de cellules d'accumulateur (2b), en particulier fixe, étant connectés électriquement en parallèle, et/ou
- une troisième paire de transmission (4ac) des entrées et/ou des sorties (4a, 4c), différente au moins en partie de la première et/ou de la deuxième, et le premier nombre de cellules d'accumulateur (2a) et le deuxième nombre de cellules d'accumulateur (2b), en particulier fixes, étant connectés électriquement en série et/ou la deuxième paire de blocs (3ac), en particulier fixes, étant connectés électriquement en parallèle.

2. Bloc d'accumulateurs (1) selon la revendication 1,
- le bloc d'accumulateurs (1) étant conçu pour l'alimentation avec seulement la première tension (U1) au moyen de la première paire de blocs (3ab), et
- le bloc d'accumulateurs (1) étant conçu pour l'alimentation avec seulement la deuxième tension (U2) au moyen de la deuxième paire de blocs (3ac).

3. Bloc d'accumulateurs (1) selon l'une des revendications précédentes,
- la pluralité de cellules d'accumulateur (2) présentant le premier nombre de cellules d'accumulateur (2a) et le deuxième nombre de cellules d'accumulateur (2b),
- le bloc d'accumulateurs (1) étant conçu pour l'alimentation avec la première tension (U1) définie par une première tension totale (Ua), en particulier égale à la première tension totale (Ua), uniquement du premier nombre de cellules d'accumulateur (2a), et
- le bloc d'accumulateurs (1) étant conçu pour l'alimentation avec la deuxième tension (U2) définie par une deuxième tension totale (Ua+Ub), en particulier égale à la deuxième tension totale (Ua+Ub), du premier nombre de cellules d'accumulateur (2a) et du deuxième nombre de cellules d'accumulateur (2b), en particulier fixes, connectées électriquement en série.

4. Bloc d'accumulateurs (1) selon l'une des revendications précédentes,
- la pluralité de cellules d'accumulateur (2) présentant le premier nombre de cellules d'accumulateur (2a) et le deuxième nombre de cellules d'accumulateur (2b),
- le premier nombre de cellules d'accumulateur (2a) et la première paire de blocs (3ab), en particulier fixes, étant connectés électriquement en parallèle, et
- le premier nombre de cellules d'accumulateur (2a) et le deuxième nombre de cellules d'accumulateur (2b), en particulier fixes, étant connectés électriquement en série et la deuxième paire de blocs (3ac), en particulier fixes, étant connectés électriquement en parallèle.

5. Bloc d'accumulateurs (1) selon l'une des revendications précédentes,
- le dispositif de transmission de puissance (4) présentant un convertisseur de tension continue (4'), en particulier le convertisseur de tension continue (4').

6. Bloc d'accumulateurs (1) selon l'une des revendications précédentes,
- le dispositif de transmission de puissance (4) étant réglable, et
- le bloc d'accumulateurs (1) présentant un dispositif de réglage (5), le dispositif de réglage (5) étant conçu pour régler le dispositif de transmission de puissance (4) de façon que le premier état de charge (LZa) et/ou le deuxième état de charge (LZb) soit/soient réglé(s).

7. Bloc d'accumulateurs (1) selon l'une des revendications précédentes,
- la première tension (U1) étant une tension nominale de 10 V minimum, en particulier de 30 V minimum, et/ou de 43 V maximum, et/ou
- la deuxième tension (U2) étant une tension nominale de 18 V minimum, en particulier de 43 V minimum, et/ou de 72 V maximum, en particulier de 54 V maximum.

8. Bloc d'accumulateurs (1) selon l'une des revendications précédentes, en particulier la revendication 6,
- le bloc d'accumulateurs (1) présentant un boîtier de bloc (6), la pluralité de cellules d'accumulateur (2), en particulier, et le dispositif de transmission de puissance (4) et/ou le dispositif de réglage (5), étant agencé, en particulier agencés dans le boîtier de bloc (6), et les contacts de puissance de bloc (3a, 3b, 3c) étant agencés sur le boîtier de bloc (6).

9. Système (100), le système (100) présentant :
- un bloc d'accumulateurs (1) selon l'une des revendications précédentes, et
- le premier appareil de traitement (52) et/ou le premier appareil de charge (53) et/ou le deuxième appareil de traitement (57) et/ou le deuxième appareil de charge (58) .

10. Système (1) selon la revendication 9,
- le premier outil de traitement (52) et/ou le deuxième outil de traitement (57) étant une scie (57'), une élagueuse haute, une débroussailleuse (52'), une cisaille à haies, un taille-haies, un souffleur, un souffleur de feuilles, une élagueuse, une tronçonneuse, une balayeuse, un rouleau de balayage, une brosse de balayage, une tondeuse à gazon, un scarificateur, une cisaille à herbe ou un nettoyeur haute pression.

11. Utilisation d'un bloc d'accumulateurs (1) selon l'une des revendications 1 à 8, en particulier d'un système selon la revendication 9 ou 10, comprenant le premier appareil de traitement (52) et/ou le premier appareil de charge (53) à la première tension (U1) et/ou le deuxième appareil de traitement (57) et/ou le deuxième appareil de charge (58) à la deuxième tension (U2).
